# EUROPÄISCHE PATENTSCHRIFT

(11) **EP 0 993 581 B1**
(45) Veröffentlichungstag und Bekanntmachung des Hinweises auf die Patenterteilung: **06.03.2002**
(21) Anmeldenummer: 98936206.6
(22) Anmeldetag: 17.06.1998
(51) Int. Cl.: F22B 1/18

(54) **ABHITZEDAMPFERZEUGER**
WASTE HEAT STEAM GENERATOR
GENERATEUR DE VAPEUR PAR RECUPERATION DE CHALEUR PERDUE

(30) Priorität: 30.06.1997 DE 19727721
(43) Veröffentlichungstag der Anmeldung: 19.04.2000
(73) Patentinhaber: SIEMENS AKTIENGESELLSCHAFT, 80333 München (DE)
(72) Erfinder: BRÜCKNER, Hermann, D-91080 Uttenreuth (DE); SCHWARZOTT, Werner, D-91091 Grossenseebach (DE); STIERSTORFER, Helmut, D-91054 Erlangen (DE)
(86) Internationale Anmeldenummer: DE9801663
(87) Internationale Veröffentlichungsnummer: WO9901697

(56) Entgegenhaltungen:
- EP-A- 0 359 735
- EP-A- 0 474 622
- EP-A- 0 848 207
- WO-A-84/04149
- DE-A- 4 142 376
- DE-A- 4 303 613

## Beschreibung

Die Erfindung bezieht sich auf einen Abhitzedampferzeuger, insbesondere für eine Gas- und Dampfturbinenanlage, mit einer Anzahl von mittels Rauchgas beheizbaren und ein aufzuheizendes Medium führenden Heizflächen gemäß dem Oberbegriff des Ansprüchs 1.

Ein derartiger Abhitzedampferzeuger oder Abhitzekessel ist üblicherweise Teil einer Gas- und Dampfturbinenanlage, bei der die im entspannten Arbeitsmittel aus der Gasturbine enthaltene Wärme zur Erzeugung von Dampf für die Dampfturbine genutzt wird. Die Wärmeübertragung erfolgt mittels einer Anzahl von Heizflächen, die in dem Abhitzedampferzeuger in Form von Rohren oder Rohrbündeln angeordnet sind. Diese wiederum sind in den mindestens eine Druckstufe umfassenden Wasser-Dampf-Kreislauf der Dampfturbine geschaltet. Dabei weist jede Druckstufe üblicherweise als Heizflächen einen Vorwärmer oder Economizer und einen Verdampfer sowie einen Überhitzer auf. Eine Schaltung mit einer ersten oder Hochdruckstufe und mit einer zweiten oder Niederdruckstufe - ein sogenannter Zwei-Druck-Prozeß - ist aus der EP 0 410 111 B1 bekannt.

Infolge der Weiterentwicklung der stationaren Gasturbine in Richtung auf eine höhere Einheitenleistung und einen höheren Wirkungsgrad in Verbindung mit einer gesteigerten Abgastemperatur am Gasturbinenaustritt ist abzusehen, daß auch eine Anpassung der Frischdampfparameter, nämlich der Frischdampftemperatur und des Frischdampfdruckes, zur weiteren Steigerung des Anlagenwirkungsgrades erforderlich wird. Aus einer erhohten Abgastemperatur der Gasturbine resultiert demzufolge eine Anhebung der Frischdampfparameter, um einen entsprechend hohen Wirkungsgrad des gesamten Gas- und Dampfturbinenprozesses zu erreichen.

Bei einem derartigen als Trommelkessel ausgebildeten und nach dem Umlaufprinzip arbeitenden Abhitzedampferzeuger erfolgt das Ende der Verdampfung durch Separieren des Dampfes aus dem noch nicht verdampften Wasser an Umlenkblechen in der Trommel. Dieses Separieren erfordert einen Umlauf. Dieser Umlauf und die Dampftrennung erfordern zwischen Wasser und Dampf einen nennenswerten Dichteunterschied, der wiederum einen nennenswerten Druckabstand (> 50 bis 60 bar) vom kritischen Druck (221 bar) voraussetzt. Die Dampftrennung begrenzt somit den Druck nach oben, so daß ein Trommelkessel lediglich unterhalb eines Betriebsdrucks von 160 bis 170 bar arbeiten kann. Zudem erfordern hohe Dampfdrücke große Wanddicken der Wasser-Dampf-Trenntrommel, was die zulässige Temperaturänderungsgeschwindigkeit im Anfahr- und Lastwechselbetrieb unerwünschterweise stark begrenzt.

Beim zu diesem Umlauf- oder Naturumlaufprinzip alternativen Zwangdurchlaufprinzip in einem fossil gefeuerten Durchlaufdampferzeuger führt die Beheizung von dessen eine Brennkammerwand bildenden Verdampferrohren zu einer vollständigen Verdampfung des Strömungsmediums in den Verdampferrohren in einem Durchgang. Das Ende der Verdampfung und damit gleichzeitig der Beginn der Dampfüberhitzung stellt sich bei diesem Zwangdurchlaufprinzip lastabhängig ein und ist örtlich nicht fixiert. Dabei kann mit einem derartigen Durchlaufdampferzeuger aufgrund fehlender Dampftrennung oder Wasserabscheidung ein Frischdampfdruck oberhalb des kritischen Wasserdruckes realisiert werden. Ein derartiger Durchlaufdampferzeuger ist z.B. aus der EP 0 595 009 B1 bekannt.

In Verbindung mit einer Gasturbine in einer sogenannten kombinierten Gas- und Dampfturbinenanlage wird ein derartiger Durchlaufdampferzeuger üblicherweise jedoch nicht als reiner Abhitzedampferzeuger eingesetzt. Vielmehr dient das sauerstoffhaltige Abgas aus der Gasturbine lediglich als Verbrennungsluft für die Feuerungsanlage dieses fossil gefeuerten Dampferzeugers. Nachteilig bei einem derartigen Durchlaufdampferzeuger sind dessen hoher schaltungs- und regelungstechnischer Aufwand sowie dessen hohe Anfahrverluste durch den sogenannten Wasserausstoß. Dieser entsteht, wenn die Verdampfung im Verdampfer beginnt und der Dampf die stromabwärts vorhandene Wassermenge (Wassertropfen) ausschiebt. Zur Beherrschung der dadurch bedingten Anfahrverluste vorgesehene zusatzliche Abscheide- und Kontrollkomponenten erhohen zusätzlich den technischen Aufwand und damit die Investitionskosten, die mit einer gewünschten Realisierung hoher und höchster Dampfdrücke stark zunehmen. Ein weiterer, wesentlicher Nachteil des befeuerten Durchlaufdampferzeugers gegenüber dem reinen Abhitzedampferzeuger besteht in einer vergleichsweise ungleichmaßigen Anpassung des Temperaturverlaufs des beheizten Mediums (Wasser/Wasser-Dampf-Linie) an den Temperaturverlauf des heizenden Mediums (Rauchgaslinie).

Der Erfindung liegt daher die Aufgabe zugrunde, einen Abhitzedampferzeuger, insbesondere für eine Gas- und Dampfturbinenanlage, anzugeben, mit dem bei gleichzeitig stromungstechnisch stabilem Betrieb in allen Lastbereichen, insbesondere auch im Teillastbereich, auch ein Kritischer oder uberkritischer Dampfdruck realisierbar ist.

Diese Aufgabe wird erfindungsgemäß gelost durch die Merkmale des Anspruchs 1. Dazu ist ein nach dem Zwangdurchlaufprinzip arbeitender Abhitzedampferzeuger vorgesehen, dessen trommelrichtung des Rauchgases geschaltet ist.

Der Verdampfer ist eingangsseitig mit dem Vorwärmer über einen Eintrittsverteiler verbunden, der mit einem Austrittssammler des Vorwärmers identisch ist. Zur Erzielung eines besonders stabilen Betriebs des Verdampfers ist dieser eingangsseitig mit einer Drosselanordnung versehen, wobei zweckmäßigerweise in den Eintritt jedes einzelnen Verdampferrchres eine Drossel geschaltet ist. Dadurch wird ein erhöhter Druckverlust über einen besonders großen Lastbereich im Verdampfer erzielt.-Dies gewährleistet einen gleichmäßigen Durchfluß durch die Verdampferrohre.

Darüber hinaus ist anstelle ublicherweise eingesetzter Sammler und Verteiler zwischen Verdampferabschnitten oder Verdampferteilen lediglich ein Druckausgleichssammler vorgesehen. Dieser unterteilt den gesamten Verdampfer druckseitig quasi in zwei Abschnitte, da an den Enden dieser Verdampferabschnitte jeweils gleiche Drücke herrschen. Dies erhöht unter Vermeidung einer weiteren Anhebung der Druckverluste die Stabilität des Durchflusses. Zweckmäßigerweise umfaßt dieser Druckausgleichsammler lediglich ein relativ dünnes Rohr zur Verbindung einer Anbohrung jedes Verdampferrohres. Dieses gering dimensionierte Verbindungsrohr beeinflußt die Strömung innerhalb des Verdampfers nur unwesentlich und ist daher im Hinblick auf die Aufteilung des sich im Verdampfer einstellenden Zweiphasengemisches des aufzuheizenden Mediums auf die Verdampferrohre unproblematisch.

Zweckmaßigerweise sind auch ein dem Verdampfer rauchgasseitig nachgeordneter Vorwarmer und ein dem Verdampfer rauchgasseitig vorgeordneter Überhitzer mediumseitig in Gegenstromschaltung ausgeführt. Ein derartiger Durchlauf- oder Zwangdurchlauf-Abhitzedampferzeuger ermöglicht die Realisierung hoher Damofzustände bis zu überkritischen Werten, da dieser keiner Druckbegrenzung unterliegt. Des weiteren können kurze Anfahrzeiten und hohe Laständerungsgeschwindigkeiten durch Vermeidung des Einsatzes von dickwandigen Trommeln realisiert werden. Dies trägt wiederum zu einem besonders günstigen Anlagenverhalten bei. Ferner wird eine besonders hohe betriebliche Flexibilität erreicht, da einerseits die Einstellung der Frischdampftemperatur allein mittels des Mediumsdurchsatzes möglich ist, und da andererseits zumindest innerhalb bestimmter Grenzen ein veränderbarer Mediumsdurchsatz einstellbar ist.

Zwar ist aus der DE 43 03 613 A1 ein Zwangdurchlaufdampferzeuger mit mediumseitig im Gegenstrom zum Rauchgas geschalteten Vorwärmer- und Verdampfersowie Überhitzer-Heizflächen bekannt. Jedoch sind dort einerseits die Heizflächen in herkömmlicher Weise über Austritts- und Eintrittssammler miteinander verbunden. Andererseits ist der Verdampfer durch Zwischenschaltung sowohl eines Eintrittssammlers als auch eines Austrittssammlers geteilt ausgeführt. Dabei wird ein Abschnitt des Verdampfers während des Anfahrens mittels einer Bypassteitung überbrückt, um einen Wasserausstoß möglichst gering zu halten. Die gewünschten stabilen Strömungsverhältnisse im Verdampfer bei gleichzeitiger Minimierung der Temperaturdifferenzen zwischen den einzelnen Verdampferrohren werden mit dieser Schaltung jedoch nicht erreicht.

Zur Realisierung des Durchlaufprinzips ist der Verdampfer eingangsseitig ohne Zwischenschaltung einer Wasser-Dampf-Trenntrommel quasi direkt mit dem Ausgang des Vorwärmers verbunden. Die dabei vorgesehene mediumseitige Schaltung des Verdampfers im Gegenstrom zum Rauchgas führt vorteilhafterweise zu gleichmaßigen Temperaturabständen zwischen der Rauchgaslinie und der Wasser/Wasserdampf-Linie, so daß insgesamt eine Heizfläche relativ geringer Größe erforderlich ist. Außerdem hat diese Gegenstromschaltung den Vorteil eines besonders geringen Wasserausstoßes beim Anfahren des Abhitzedampferzeugers, da die rauchgasseitig heiße Seite mit nen-nenswerter Dampfblasenbildung erst am wasserseitigen Ende des Verdampfers liegt. Aufgrund des kurzen verfügbaren Weges für gebildete Dampfblasen schieben diese nur einen geringen Wasserinhalt aus dem Verdampfer aus.

Bezüglich der wärmetechnischen Auslegung des Verdampfers ist dieser zweckmäßigerweise in zwei Einzelheizflächen, d. h. in zwei Verdampferteile, unterteilt. Dabei weist der mediumseitig erste Verdampferteil keinen Austrittssammler auf. Ebenso weist der diesem nachgeschaltete zweite Verdampferteil keinen Eintrittsverteiler auf. Dabei ist die Anzahl von Parallelrohren beider Einzelheizflächen oder Verdampferteile gleich. Außerdem ist der erste Verdampferteil zweckmäßigerweise aus Rohren mit gegenüber dem zweiten Verdampferteil kleinem Innendurchmesser aufgebaut. Durch diese Verdampferkonstruktion wird aufgrund der Einsparung von Sammlern eine Kosteneinsparung erzielt. Liegt der Druckverlust bevorzugt am Strömungsanfang und wird entlang des gesamten Verdampfers die Strömungsgeschwindigkeit in einem bevorzugten Bereich gehalten, so wird eine stabile Strömung erzielt. Dadurch wird ein besonders guter Wärmeübergang vom Rauchgas auf das den Verdampfer durchströmende Medium mit einer niedrigen Erosion erreicht. Außerdem werden mögliche Temperaturdifferenzen zwischen den Parallelrohren aufgrund einer gleichmäßigen wasserdampfseitigen Durchströmung gering gehalten.

Um zu verhindern, daß beim Anfahren ausgestoßenes Wasser in den Überhitzer gelangt, ist diesem eine dem Verdampfer nachgeschaltete Anfahrflasche vorgeschaltet. Dabei sind der Verdampfer und der Überhitzer mit dem dampfseitigen Kopfende der Anfahrflasche verbunden. Der Vorwärmer und der Verdampfer sind eingangsseitig mit einem wasserseitigen Bodenanschluß der Anfahrflasche verbunden. Die in den Verdampfer und in den Vorwärmer geförderten Teilströme sind mittels Stellorganen einstellbar. Dem Vorwärmer zugeführtes Speisewasser kann somit um diesen Teilstrom aus der Anfahrflasche ergänzt oder zumindest teilweise durch diesen ersetzt werden. Auch kann das für den Betrieb des Durchlauf-Abhitzedampferzeugers nicht benötigte Wasser aus der Anfahrflasche gesteuert abgeführt werden. Dazu ist am wasserseitigen Bodenende der Anfahrflasche eine Abführleitung vorgesehen.

Der dem Überhitzer über die Anfahrflasche und über einen Eintrittsverteiler zugeführte Dampf wird aus diesem als überhitzter Dampf (Hauptdampfstrom) über einen Austrittssammler abgeführt. Dabei ist der Überhitzer vorzugsweise aus zwei Einzelheizflächen aufgebaut, die mediumseitig hintereinander geschaltet und - bei stehender Bauweise des Durchlaufabhitzedampferzeugers - rauchgasseitig übereinander angeordnet sind, so daß eine zweistufige Dampfüberhitzung erfolgt.

Die mit der Erfindung erzielten Vorteile bestehen insbesondere darin, daß durch den Aufbau des Verdampfers eines Abhitzedampferzeugers als Zwangdurchlaufverdampfer in Gegenstromschaltung über einen weiten Lastbereich eine besonders stabile Betriebsweise erzielt wird. Dadurch kann der trommelfreie Verdampfer bei gleichzeitig geringem wasser-/dampfseitigen Druckverlust derart großflachig ausgestaltet sein, daß dieser in allen Betriebszuständen nach dem Durchlaufprinzip als Teil-Economizer und als Verdampfer sowie als Teil-Überhitrer wirkt. Daher ist am Austritt des Vorwärmers oder der Economizer-Heizfläche das Speisewasser in jedem Betriebspunkt unterkühlt, so daß eine Ausdampfung im Economizer sicher verhindert ist. Da die Aufwarmung auf Siedetemperatur im als TeilEconomizer wirkenden Verdampfer selbst erfolgt, ist der sogenannte "Approach-Point" stets null. Daraus resultiert eine im Vergleich zum Trommelkessel geringe Verdampferheizfläche.

Auch ist eine neutrale chemische Fahrweise möglich, wodurch der Chemikalienverbrauch reduziert wird. Aufgrund der utralen chemischen Fahrweise ist zudem eine Abschlämmung im Betrieb nicht notwendig. Durch Vermeidung des Einsatzes von Wasser-Dampf-Trenntrommeln und dabei erforderlichen verbindenden Rohrleitungen sowie durch die Möglichkeit verminderter Kessel- oder Dampferzeugerabmessungen wird eine erhebliche Kostenreduzierung erzielt. Innerhalb einer Gas- und Dampfturbinenanlage ist, insbesondere auch in niedrigen Teillastbereichen der Gasturbine, eine stabile Fahrweise im Durchlaufbetrieb sichergestellt.

Nachfolgend werden anhand einer Zeichnung Ausführungsbeispiele der Erfindung beschrieben. Darin zeigen:

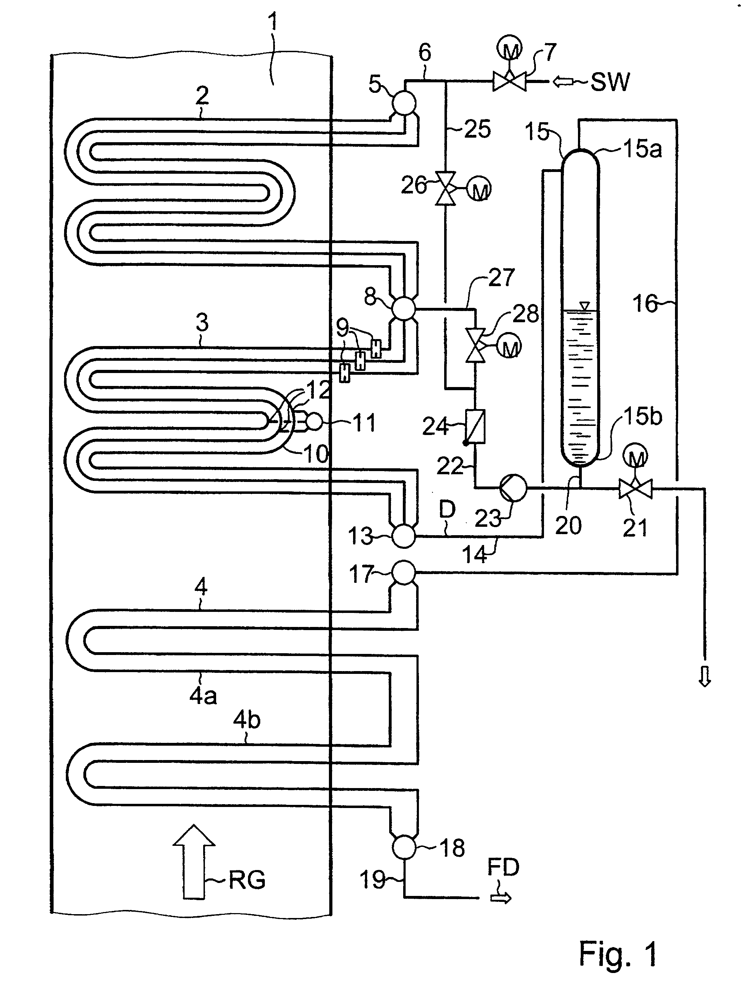

- FIG 1: schematisch in einem Ausschnitt einen Durchlauf-Abhitzedampferzeuger, dessen Heizflächen in einen Wasser-Dampf-Kreislauf geschaltet sind, und
- FIG 2: einen aus zwei Einzelheizflächen aufgebauten Verdampfer des Abhitzedampferzeugers nach FIG 1.

Einander entsprechende Teile sind in beiden Figuren mit den gleichen Bezugszeichen versehen.

Der dargestellte Durchlauf-Abhitzedampferzeuger 1 in stehender Bauweise ist z.B. Teil einer Gas- und Dampfturbinenanlage und wird primärseitig von heißem Rauchgas RG aus der Gasturbine durchströmt. Das abgekühlte Rauchgas RG verläßt den Abhitzedampferzeuger 1 in Richtung auf einen nicht dargestellten Kamin. Der Abhitzedampferzeuger 1 umfaßt als Heizflächen einen Vorwärmer oder Economizer 2 und einen Verdampfer 3 sowie einen Überhitzer 4 einer Druckstufe. Die dargestellte Heizflächenanordnung ist vorzugsweise sowohl im Hochdruckals auch im Mitteldruckteil des Durchlaufabhitzedampferzeugers 1 eingesetzt.

Der Vorwärmer 2 weist eingangsseitig einen allen Vorwärmerrohren gemeinsamen Eintrittsverteiler 5 auf, in den eine Speisewasserleitung 6 mit einem motorgetriebenen Steuerventil 7 geschaltet ist. Austrittsseitig münden die Rohre des Vorwärmers 2 in einen gemeinsamen Austrittssammler 8, der gleichzeitig Eintrittsverteiler des dem Vorwärmer 2 mediumseitig nachgeschalteten Verdampfers 3 ist. Zur Erzielung eines stabilen Betriebs des Verdampfers 3 ist diesem eine Drosselanordnung vorgeordnet. Dazu ist in den Eintritt jedes Parallelrohres des Verdampfers 3 eine Drossel 9 geschaltet, wodurch ein erhöhter Druckverlust über einen breiten Lastbereich im Verdampfer 3 erzielt wird. Im Bereich einer Umlenkung 10 des Verdampfers 3 ist ein Druckausgleichsammler 11 in Form eines relativ dünnen Rohres zur Verbindung einer Anbohrung 12 jedes Parallelrohres des Verdampfers 3 vorgesehen. Ausgangsseitig münden die Parallelrohre des Verdampfers 3 in einen Austrittssammler 13, der über eine Dampfleitung 14 an eine Anfahrflasche 15 angeschlossen ist. Der Anschluß der Dampfleitung 14 ist am dampfseitigen Kopfende 15a der Anfahrflasche vorgesehen, an das eine weitere Dampfleitung 16 angeschlossen ist. Die Dampfleitung 16 mündet in einen Eintrittsverteiler 17 des Überhitzers 4. Der aus einer ersten Teil- oder Einzelheizfläche 4a und aus einer dieser mediumseitig nachgeschalteten und rauchgasseitig vorgeordneten zweiten Teilheizfläche 4b aufgebaute Überhitzer 4 weist ausgangsseitig einen Austrittssammler 18 auf, an den eine Hauptdampfleitung 19 angeschlossen ist.

Die Anfahrflasche 15 weist an dessen wasserseitigem Bodenende 15b eine Abführleitung 20 mit einem motorgetriebenen Steuerventil 21 auf. Ein Abzweig 22 dieser Abführleitung 21, in den eine Umwälzpumpe 23 geschaltet ist, führt über eine Steuer- oder Drosselklappe 24 und ein in eine erste Teilstromleitung 25 geschaltetes motorgetriebenes Steuerventil 26 an die Speisewasserleitung 6. Eine zweite Teilstromleitung 27 des Abzweigs 22 führt über ein motorgetriebenes Steuerventil 28 an den Eintrittsverteiler bzw. Austrittssammler 8. Die Heizflächen 2, 3 und 4 des Durchlauf-Abhitzedampferzeugers 1 sind über die Speisewasserleitung 6 und die Hauptdampfleitung 19 in nicht näher dargestellter Art und Weise in den Wasser-Dampf-Kreislauf einer Dampfturbine der Gas- und Dampfturbinenanlage geschaltet.

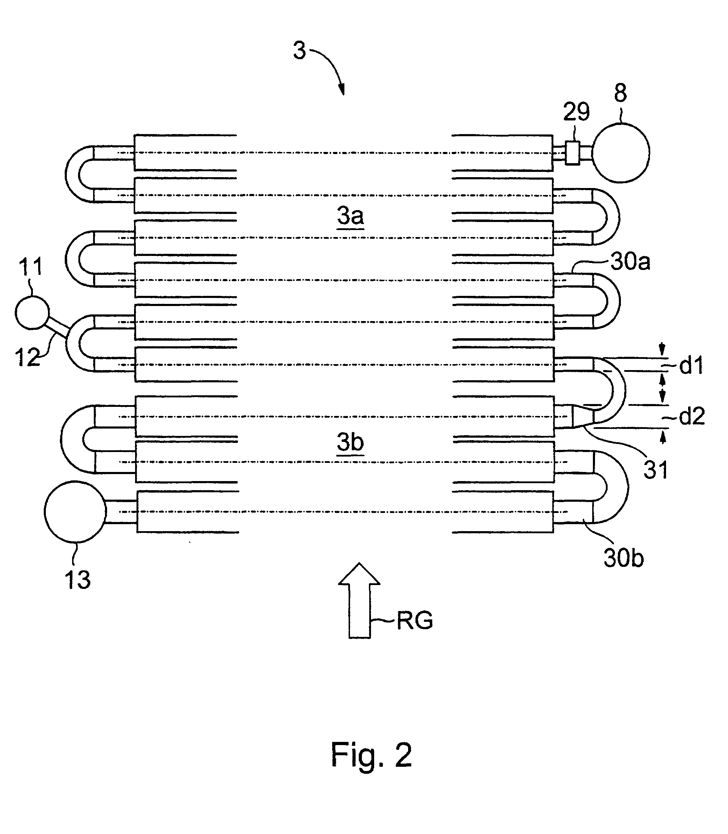

FIG 2 zeigt eine bevorzugte Ausführungsform des Verdampfers 3 mit zwei Einzelheizflächen. Diese sind realisiert durch einen ersten Verdampferteil 3a und einen diesem mediumseitig nachgeschalteten und rauchgasseitig vorgeordneten zweiten Verdampferteil 3b. Der Eintrittsverteiler 8 ist an eine Einlaßöffnung 29 des ersten Verdampferteils 3a angeschlossen. Beide Verdampferteile 3a und 3b sind aus jeweils der gleichen Anzahl von Parallelrohren zusammengesetzt, von denen jeweils nur ein Parallel- oder Verdampferrohr 30a bzw. 30b sichtbar ist. Der Druckausgleichsammler 11 ist an den ersten Verdampferteil 3a angeschlossen, wobei lediglich eine Anbohrung 12 sichtbar ist.

Die beiden Verdampferteile 3a und 3b sind direkt, d.h. ohne Zwischenschaltung eines Austrittssammlers oder Eintrittsverteilers, miteinander verbunden. Dabei weisen die Parallelrohre 30a des ersten Verdampferteils 3a einen Innendurchmesser d1 auf, der gegenüber dem Innendurchmesser d2 der Parallelrohre 30b des zweiten Verdampferteils 3b kleiner ist (d1 < d2). Die Verbindung der einzelnen Parallelrohre 30a und 30b der Verdampferteile 3a bzw. 3b ist über jeweils ein konisch ausgebildetes Zwischenstück hergestellt. Dieses Zwischen- oder Verbindungsstück 31 ist zur Realisierung der Durchmessererweiterung konisch, vorzugsweise in Form eines Kegelstumpfes, ausgebildet. Ausgangsseitig sind die Parallelrohre 30b des zweiten Verdampferteils 3b an den Austrittssammler 13 angeschlossen.

Beim Betrieb des Durchlauf-Abhitzedampferzeugers 1 strömt kondensiertes Wasser, sogenanntes Speisewasser SW, aus einem der (nicht gezeigten) Dampfturbine nachgeschalteten (nicht gezeigten) Kondensator über die Speisewasserleitung 6 und durch den Vorwärmer 2 in den Austrittssammler oder Eintrittsverteiler 8. Von dort strömt das vorgewärmte Speisewasser SW über die Drosseln 9 in die einzelnen Verdampferrohre 30a des ersten Verdampferteils 3a des Verdampfers 3. Dabei ist die Verbindung zwischen dem Vorwärmer 2 und dem Verdampfer 3 bei gleichzeitig besonders kleiner Gesamtheizfläche des Verdampfers 3 besonders kurz und unkompliziert.

Die Drosseln 9 gewährleisten praktisch über den gesamten Lastbereich des Abhitzedampferzeugers 1 einen erhöhten Druckverlust im Verdampfer 3. Der Verdampfer 3, d. h. sowohl dessen erster Verdampferteil 3a mit den Verdampferrohren 30a als auch dessen diesem nachgeschalteter zweiter Verdampferteil 3b mit den Verdampferrohren 30b, wird mediums- oder wasserseitig im Gegenstrom zur Strömungsrichtung des Rauchgases RG durchströmt. Dabei wird ein stabiler und gleichmäßiger Durchfluß des vorgewärmten Speisewassers SW durch die Verdampferrohre 30a, 30b erzielt, wobei sich in den Verdampferrohren 30a, 30b die dem jeweiligen Druck des Strömungsmediums entsprechende Siedetemperatur einstellt.

Im Verdampfer 3 erzeugter Dampf D ist am Austritt des Verdampfers 3, d.h. im Austrittssammler 13 und in der daran angeschlossenen Dampfleitung 14, aufgrund des Durchlaufs oder Zwangdurchlaufs bei entsprechender Durchsatzmenge in jedem Betriebspunkt leicht überhitzt. Somit können keine Wassertropfen in den nachgeschalteten Überhitzer 4 gelangen. Dadurch sind Schäden an den Heizflächen des Überhitzers 4 aufgrund unzulässiger Temperaturgradienten sicher vermieden. Aufgrund dieser Auslegung und Ausgestaltung des Verdampfers 3 kann dieser über einen weiten Lastbereich mit gleitendem Verdampfungspunkt betrieben werden. Der im Verdampfer 3 erzeugte Dampf D kann somit direkt in den Überhitzer 4 eingeleitet werden, wobei lediglich beim Anfahren des Durchlauf-Abhitzedampferzeugers 1 die Anfahrflasche 15 in Funktion tritt.

Da beim Anfahren der Wasserausstoß aus dem Verdampfer 3 besonders gering ist, ist lediglich eine relativ geringe Dimensionierung der Anfahrflasche 15 zur Aufnahme des ausgestoßenen Wassers erforderlich. Dabei können relativ geringe Wandstärken der Anfahrflasche 15 realisiert werden, was mit entsprechend kurzen Anfahr- und Lastwechselzeiten verbunden ist. Bei der dargestellten stehenden Konstruktion des Durchlauf-Abhitzedampferzeugers 1 wird dieser besonders geringe Wasserausstoß dadurch erzielt, daß insbesondere die Verdampferrohre 30a, 30b in Realisierung der Gegenstromschaltung medium- oder wasserseitig von oben nach unten durchströmt werden. Die Verdampfung liegt daher im wesentlichen in den unteren Verdampferrohren 30b des zweiten Verdampferteils 3b und nimmt in Richtung der oberen Verdampferrohre 30a des ersten Verdampferteils 3a hin ab.

Während der beim Anfahren bereits erzeugte und in der Anfahrflasche 15 abgetrennte Dampf D zur weiteren Überhitzung durch den Überhitzer 4 und von dort im überhitzten Zustand als Hauptdampf oder Frischdampf FD der (nicht gezeigten) Dampfturbine zugeführt sowie von dort als Kondensat in den Wasser-Dampf-Kreislauf wieder eingebracht wird, wird das dem Wasser-Dampf-Kreislauf lediglich beim Anfahren quasi entzogene Wasser aus der Anfahrflasche 15 bedarfsweise dem Verdampfer 3 und/oder dem Vorwärmer 2 zugeführt. Aus Gründen der Strömungsstabilität wird zweckmäßigerweise jedoch der wesentliche Anteil dieses Anfahrwassers aus der Anfahrflasche 15 über die erste Teilstromleitung 25 dem Speisewasser SW vor dessen Eintritt in den Vorwärmer 2 zugemischt. Im Wasser-Dampf-Kreislauf nicht benötigtes Anfahrwasser kann über die Abführleitung 20 aus der Anfahrflasche 15 abgezogen werden.

Mit diesem nach dem Durchlaufprinzip arbeitenden Abhitzedampferzeuger 1 können hohe Dampfdrücke auch im kritischen oder im überkritischen Bereich realisiert werden. Dazu sind beide Verdampferteile 3a und 3b - und damit der gesamte Verdampfer 3 - mediumseitig abwärts durchströmt, während das Rauchgas RG eine aufsteigende Strömungsrichtung aufweist. Mit dem Durchlauf-Abhitzedampferzeuger 1 wird insgesamt ein strömungstechnisch besonders stabiler Betrieb bis hin zur Minimallast im Durchlaufprinzip erzielt.

## Patentansprüche

1. Abhitzedamperzeuger (1), insbesondere für eine Gas- und Dampfturbinenanlage, mit einer Anzahl von mittels Rauchgas (RG) beheizbaren und ein aufzuheizendes Medium (SW) führenden Heizflächen (2,3,4), wobei ein einem Verdampfer (3) rauchgsseitig nachgeordneter Vorwärmer (2) und ein dem Verdampfer (3) rauchgasseitig vorgeordneter Überhitzer (4) mediumseitig im Gegenstrom zum Rauchgas (RG) geschaltet sind, **dadurch gekennzeichnet, daß** der mediumseitig im Gegenstrom zum Rauchgas (RG) geschaltete Verdampfer (3) eingangsseitig mit dem Vorwärmer (2) über einen Eintrittsverteiler (3) verbunden ist, an den jedes Verdampferrohr (30a) über eine Drossel (9) angeschlossen ist, und daß an den Verdampfer (3) ein Druckausgleichssammler (11,12) in Form eines Ausgleichsrohrs (11) angeschlossen ist.

2. Abhitzedampferzeuger nach Anspruch 1, **dadurch gekennzeichnet, daß** das Ausgleichsrohr (12) mit einer Anbohrung (12) jedes Verdampferrohres (30a) verbunden ist.

3. Abhitzedampferzeuger nach Anspruch 1 oder 2, **dadurch gekennzeichnet, daß** der Druckausgleichssammler (11,12) in einem Umlenkbereich (10) des Verdampfers (3) an diesen angeschlossen ist.

4. Abhitzedampferzeuger nach einem der Ansprüche 1 bis 3, **dadurch gekennzechnet,** daß der Verdampfer (3) aus einer Anzahl von mediumseitig hintereinander geschalteten Verdampferteilen (3a,3b) zusammengesetzt ist.

5. Abhitzedampferzeuger nach Anspruch 4, **dadurch gekennzeichnet, daß** der mediumseitig erste Verdampferteil (3a) aus Verdampferrohren (30a) mit im Vergleich zum Innendurchmesser (d2) der diesen nachgeschalteten Verdampferrohren (30b) des zweiten Verdampferteils (3b) kleinem Innendurchmesser (d1) aufgebaut ist.

6. Abhitzedampferzeuger nach Anspruch 5, **dadurch gekennzeichnet, daß** die Verdampferrohre (30a,30b) der Verdampferteile (3a, 3b) über ein konisch ausgebildetes Verbindungsstück (31) direkt miteinander verbunden sind.

7. Abhitzedampferzeuger nach einem der Ansprüche 1 bis 6, **dadurch gekennzeichnet, daß** der Verdampfer (3) ausgangsseitig über eine Anfahrflasche (15) mit dem Überhitzer (4) verbunden ist.

8. Abhitzedampferzeuger nach Anspruch 7, **dadurch gekennzeichnet, daß** die Anfahrflasche (15) wasserseitig über eine Umwälzpumpe (23) mit nachgeschaltetem Steuerventil (26) mit dem Vorwärmer (2) verbunden ist.

9. Abhitzedampferzeuger nach Anspruch 7 oder 8,
**dadurch gekennzechnet,** daß die Anfahrflasche (15) wasserseitig über eine Umwälzpumpe (23) mit nachgeschaltetem Steuerventil (28) mit dem Verdampfer (3) verbunden ist.

10. Abhitzedampferzeuger nach Anspruch 8 oder 9, **dadurch gekennzeichnet, daß** der Umwälzpumpe (23) eine Drosselklappe (24) nachgeschaltet ist.

11. Abhitzedampfezeuger nach einem der Ansprüche 7 bis 10, **dadurch gekennzeichnet, daß** an die Anfahrflasche (15) wasserseitig eine Abführleitung (20) mit einem Steuerventil (21) angeschlossen ist.

12. Abhitzedampferzeuger nach einem der Ansprüche 1 bis 11, **dadurch gekennzeichnet, daß** der Vorwärmer (2) eingangsseitig mit einer Speisewasserleitung (6) verbunden ist, in die ein Steuerventil (7) geschaltet ist.

13. Abhitzedampferzeuger nach einem der Ansprüche 1 bis 12, **dadurch gekennzeichnet, daß** der Überhitzer (4) einen Eintrittsverteiler (17) und einen Austrittssammler (18) aufweist, an den eine Hauptdampfleitung (19) angeschlossen ist.

14. Abhitzedampferzeuger nach einem der Ansprüche 1 bis 13, **dadurch gekennzeichnet, daß** der Überhitzer (4) zwei mediumseitig hintereinander geschaltete Teilheizflächen (4a, 4b) aufweist.

15. Verwendung eines Abhitzedampferzeugers nach einem der Ansprüche 1 bis 14 als Durchlauf-Abhitzedampferzeuger.

## Claims

1. Waste-heat steam generator (1), in particular for a combined-cycle power plant, with a number of heating surfaces (2,3,4), heatable by means of flue gas (RG) and carrying a medium (SW) to be heated, a preheater (2) which follows an evaporator (3) on the flue-gas side and a superheater (4) which precedes the evaporator (3) on the flue-gas side being connected in countercurrent to the flue gas (RG) on the medium side, **characterized in that** the evaporator (3) connected in countercurrent to the flue gas (RG) on the medium side is connected on the inlet side to the preheater (2) via an inlet distributor (8) to which each evaporator tube (30a) is connected via a throttle (9), and **in that** a pressure-equalizing header (11, 12) in the form of an equalizing tube (11) is connected to the evaporator (3).

2. Waste-heat steam generator according to Claim 1, **characterized in that** the equalizing tube (12) is connected to a tapping bore (12) of each evaporator tube (30a).

3. Waste-heat steam generator according to Claim 1 or 2, **characterized in that** the pressure-equalizing header (11, 12) is connected to the evaporator (3) in a deflection region (10) of the latter.

4. Waste-heat steam generator according to one of Claims 1 to 3, **characterized in that** the evaporator (3) is composed of a number of evaporator parts (3a,3b) connected in series on the medium side.

5. Waste-heat steam generator according to Claim 4, **characterized in that** the first evaporator part (3a) on the medium side is composed of evaporator tubes (30a) having a small inside diameter (d1), as compared with the inside diameter (d2) of the evaporator tubes (30b) of the second evaporator part (3b), the evaporator tubes (30b) being located downstream of the evaporator tubes (30a).

6. Waste-heat steam generator according to Claim 5, **characterized in that** that the evaporator tubes (30a,30b) of the evaporator parts (3a,3b) are connected to one another directly via a conically designed connecting piece (31).

7. Waste-heat steam generator according to one of Claims 1 to 6, **characterized in that** the evaporator (3) is connected on the outlet side to the superheater (4) via a start-up bottle (15).

8. Waste-heat steam generator according to Claim 7, **characterized in that** the start-up bottle (15) is connected on the water side to the preheater (2) via a circulating pump (23) having a downstream control valve (26).

9. Waste-heat steam generator according to Claim 7 or 8, **characterized in that** the start-up bottle (15) is connected on the water side to the evaporator (3) via a circulating pump (23) having a downstream control valve (28).

10. Waste-heat steam generator according to Claim 8 or 9, **characterized in that** the circulating pump (23) is followed by a throttle flap (24).

11. Waste-heat steam generator according to one of Claims 7 to 10, **characterized in that** a discharge conduit (20) having a control valve (21) is connected on the water side to the start-up bottle (15).

12. Waste-heat steam generator according to one of Claims 1 to 11, **characterized in that** the preheater (2) is connected on the inlet side to a feed-water conduit (6), into which a control valve (7) is connected.

13. Waste-heat steam generator according to one of Claims 1 to 12, **characterized in that** the superheater (4) has an inlet distributor (17) and an outlet header (18), to which a main steam conduit (19) is connected.

14. Waste-heat steam generator according to one of Claims 1 to 13, **characterized in that** the superheater (4) has two part heating surfaces (4a,4b) connected in series on the medium side.

15. Use of a waste-heat steam generator according to one of Claims 1 to 14 as a once-through waste-heat steam generator.

## Revendications

1. Générateur (1) de vapeur par récupération de chaleur perdue, notamment pour une installation de turbine à gaz et de turbine à vapeur, comprenant un certain nombre de surfaces (2, 3, 4) de chauffe qui peuvent être chauffées au moyen de gaz (RG) d'échappement et dans lesquelles passe un fluide (SW) à chauffer, un préchauffeur (2) monté en aval du côté de l'échappement de l'évaporateur (3) et un surchauffeur (4) monté en amont du côté des gaz d'échappement de l'évaporateur (3) étant monté du côté du fluide à contre-courant du gaz (RG) d'échappement, **caractérisé en ce que** l'évaporateur (3) monté du côté du fluide contre-courant du gaz (RG) d'échappement communique du côté de l'entrée avec le préchauffeur (2) par un répartiteur (8) d'entrée auquel chaque tube (30a) de l'évaporateur est raccordé par un étranglement (9) et **en ce qu'**il est raccordé à l'évaporateur (3) un collecteur (11, 12) de compensation de la pression sous la forme d'un tube (11) de compensation.

2. Générateur de vapeur par récupération de chaleur perdue suivant la revendication 1, **caractérisé en ce que** le tube (11) de compensation communique avec un trou (12) de chaque tube (30a) de l'évaporateur.

3. Générateur de vapeur par récupération de chaleur perdue suivant la revendication 1 ou 2, **caractérisé en ce que** le collecteur (11, 12) de compensation de la pression est raccordé dans une zone (10) de renvoi de l'évaporateur (3) à celui-ci.

4. Générateur de vapeur par récupération de chaleur perdue suivant l'une des revendications 1 à 3, **caractérisé en ce que** l'évaporateur (3) est composé d'un certain nombre de parties (3a, 3b) d'évaporateur montées les unes derrière les autres du côté du fluide.

5. Générateur de vapeur par récupération de chaleur perdue suivant la revendication 5, **caractérisé en ce que** la première partie (3a) d'évaporateur du côté du fluide est constituée de tubes (30a) d'évaporateur ayant par rapport au diamètre (d2) intérieur des tubes (30b) d'évaporateur montés en aval de ceux-ci de la deuxième partie (3b) d'évaporateur un diamètre (d1) intérieur plus petit.

6. Générateur de vapeur par récupération de chaleur perdue suivant la revendication 5, **caractérisé en ce que** les tubes (30a, 30b) des parties (3a, 3b) d'évaporateur communiquent directement entre eux par une pièce (31) de liaison conique.

7. Générateur de vapeur par récupération de chaleur perdue suivant l'une des revendications 1 à 6, **caractérisé en ce que** l'évaporateur (3) communique du côté de la sortie avec le surchauffeur (4) par une bouteille (15) de démarrage.

8. Générateur de vapeur par récupération de chaleur perdue suivant la revendication 7, **caractérisé en ce que** la bouteille (15) de démarrage communique du côté de l'eau avec le préchauffeur (2) par l'intermédiaire d'une pompe (23) de mise en circulation ayant une vanne (26) de commande en aval.

9. Générateur de vapeur par récupération de chaleur perdue suivant la revendication 7 ou 8, **caractérisé en ce que** la bouteille (15) de démarrage communique du côté de l'eau avec l'évaporateur (3) par l'intermédiaire d'une pompe (23) de mise en circulation ayant une vanne (28) de commande montée en aval.

10. Générateur de vapeur par récupération de chaleur perdue suivant la revendication 8 ou 9, **caractérisé en ce qu'**un volet (24) d'étranglement est monté en aval de la pompe (23) de mise en circulation.

11. Générateur de vapeur par récupération de chaleur perdue suivant l'une des revendications 7 à 10, **caractérisé en ce qu'**il est raccordé à la bouteille (15) de démarrage du côté de l'eau un conduit (20) d'évacuation ayant une vanne (21) de commande.

12. Générateur de vapeur par récupération de chaleur perdue suivant l'une des revendications 1 à 11, **caractérisé en ce que** le préchauffeur communique du côté de l'entrée avec un conduit (6) d'eau d'alimentation dans lequel est montée une vanne (7) de commande.

13. Générateur de vapeur par récupération de chaleur perdue suivant l'une des revendications 1 à 12, **caractérisé en ce que** le surchauffeur (4) comporte un répartiteur (17) d'entrée et un collecteur (18) de sortie auquel est raccordé un conduit (19) principal pour la vapeur.

14. Générateur de vapeur par récupération de chaleur perdue suivant l'une des revendications 1 à 13, **caractérisé en ce que** le surchauffeur (4) comporte deux sous-surfaces (4a, 4b) de chauffe montées l'une derrière l'autre du côté du fluide.

15. Utilisation d'un générateur de vapeur par récupération de chaleur perdue suivant l'une des revendications 1 à 14 comme générateur de vapeur par récupération de chaleur perdue à passage direct.
